# EUROPEAN PATENT APPLICATION

(11) **EP 1 184 582 A2**
(43) Date of publication of application: **06.03.2002**
(21) Application number: 01120895.6
(22) Date of filing: 30.08.2001
(51) Int. Cl.: F16B 35/04

(54) **Part mounting bolt**

(30) Priority: 30.08.2000 JP 2000261244
(71) Applicant: AOYAMA SEISAKUSHO CO., LTD., Nagoya-shi, Aichi-ken (JP)
(72) Inventor: Mizuno, Hiromichi, c/o Ohguchi Plant, Niwa-gun, Aichi-ken (JP); Sawaki, Kiyohiko, c/o Ohguchi Plant, Niwa-gun, Aichi-ken (JP)
(74) Representative: Betten & Resch

(57) **Abstract**

The invention is one to provide a part mounting bolt, which is favorable in work efficiency since a latch member mounted on a pivot section does not fall off and there is no need of fitting the latch member (7) onto the pivot section (3) manually, in which a gear of resin (4) is insert molded on an upper region of an external thread of a metallic bolt body (10) to rotate a bolt about an axis, the part mounting bolt comprising a pivot section (3) formed integrally on one end of the bolt body and made of the same material as that of the bolt body, and a latch member (7) of resin integrally insert molded on the pivot section (3) to fix a part on a mounted member.

## Description

### Background of the Invention

The invention relates to a part mounting bolt for mounting to a mounted member, such as bumper, base plate or the like, a part such as an automobile lamp, for example, a headlight, a fog lamp, a small lamp and the like, a bicycle lamp, an antenna, a compartment lighting, a mirror and the like.

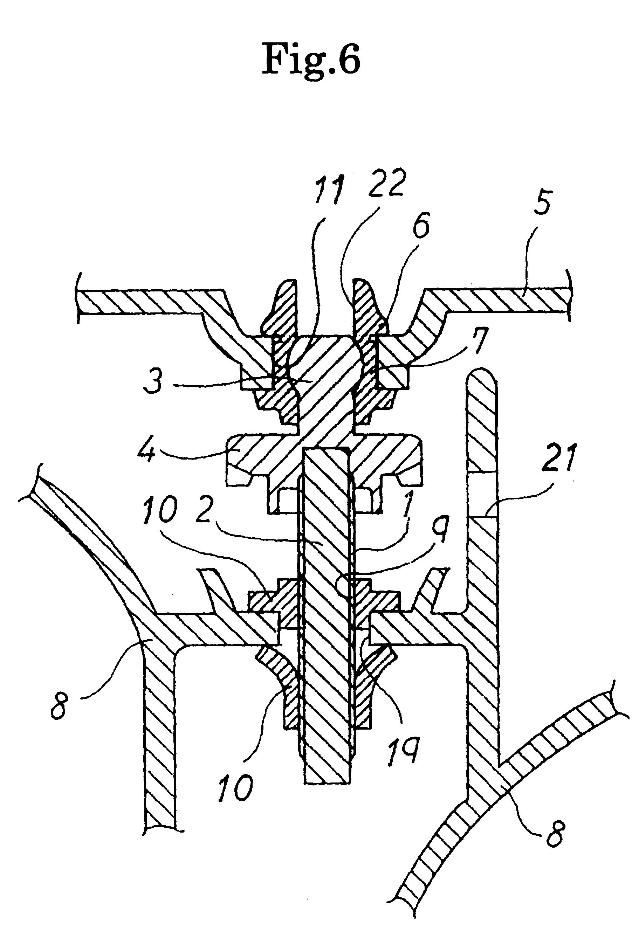

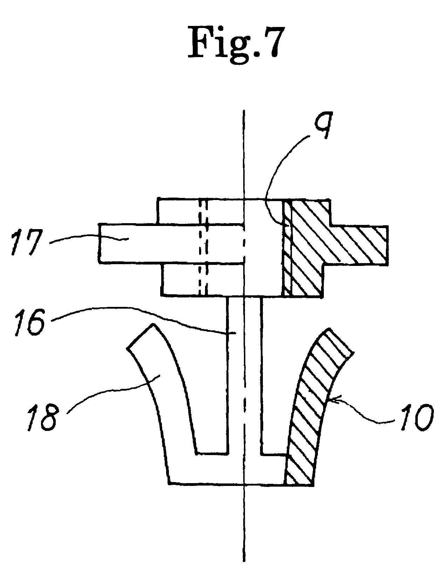

Conventionally, when a part such as an automobile lamp or the like is mounted on a mounted member, a bolt, for example, a bolt shown in Fig. 6 is used, which bolt is integrally designed so as to have as an unitary member a pivot section 3 and a gear 4 on one end of a bolt body 2 (metallic), which is formed on an outer peripheral surface thereof with an external portion 1, by using insert molding (one end of the bolt body serves as an insert and the pivot section and the gear are made from a resin -nylon resin-having been injection molded into a die), and a latch member 7 (made from polyacetal resin), which is fitted on the pivot section, having a latch pawl 6 for mounting on the mounted member. A threaded member 10 (see Fig. 7) formed at an inner peripheral surface thereof with an internal thread portion 9 is mounted in a predetermined position on a lamp housing 8, into which a fog lamp or the like is assembled, and so the lamp housing 8 is mounted on a mounted member by threading and mounting the external portion 1 of the bolt into the internal thread portion 9 of the threaded member 10, and inserting the latch member 7 made unitary with the bolt through the pivot section 3 into the mounted member 5 so that one end of the bolt is fixed to the mounted member 5 through the latch pawl 6.

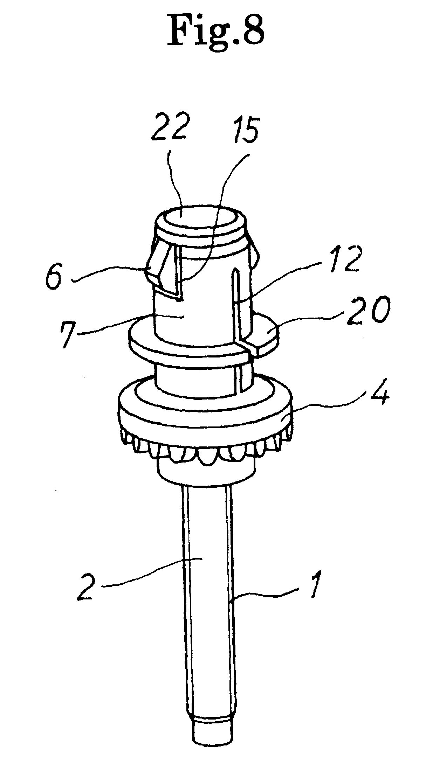

Since with such conventional bolt, the latch member 7 is formed separately from the pivot section 3 and the gear 4, however, there is a need of providing a slit 12 on the latch member 7 as shown in Fig. 8 to make a lower end of the latch member 7 openable in order to fit and mount the latch member 7 on the substantially spherical-shaped pivot section 3.

In this manner, since the latch member 7 with the lower end thereof opened is fitted and mounted on the pivot section 3, a gap is inevitably produced between the latch member 7 and the pivot section 3 after being fitted and mounted, with the result that the latch member 7 cannot be fitted and mounted on the pivot section 3 tightly.

Meanwhile, in order that the bolt having been threaded into the lamp housing 8 is inserted and mounted into the mounted member 5, there is a need of forcedly mounting the latch member 7 while inclining the same relative to an axis of the bolt body 2 since a space for the mounting work is narrow. Since the latch member 7 and the pivot section 3 do not engage with each other tightly as described above, the latch member is liable to fall off the pivot section, by which the work for mounting the lamp housing 8 to the mounted member 5 is made troublesome. Also, the latch member 7 must be mounted to the pivot section 3 prior to the work for mounting the lamp housing 8 to the mounted member 5, and such mounting relies on manual work, which is considerably responsible for an increase in man-hour.

### Summary of the Invention

The invention has been made to solve the above-mentioned problem of the prior art and to provide a part mounting bolt, which is favorable in work efficiency since a latch member mounted on a pivot section does not fall off and there is no need of fitting the latch member onto the pivot section manually.

A part mounting bolt of the invention made to solve the above-mentioned problem is one, in which a gear of resin is insert molded on an upper region of an external thread of a metallic bolt body to rotate a bolt about an axis, the part mounting bolt comprising a pivot section formed integrally on one end of the bolt body and made of the same material as that of the bolt body, and a latch member of resin integrally insert molded on the pivot section to fix a part on a mounted member.

### Brief Description of the Drawings

Fig. 1 is a plan view showing a part mounting bolt according to the invention.
Fig. 2 is a partial, cross sectional view taken along the line A-A in Fig. 1.
Fig. 3 is a partial, cross sectional view taken along the line B-B in Fig. 1.
Fig. 4 is a perspective view showing a part mounting bolt according to the invention.

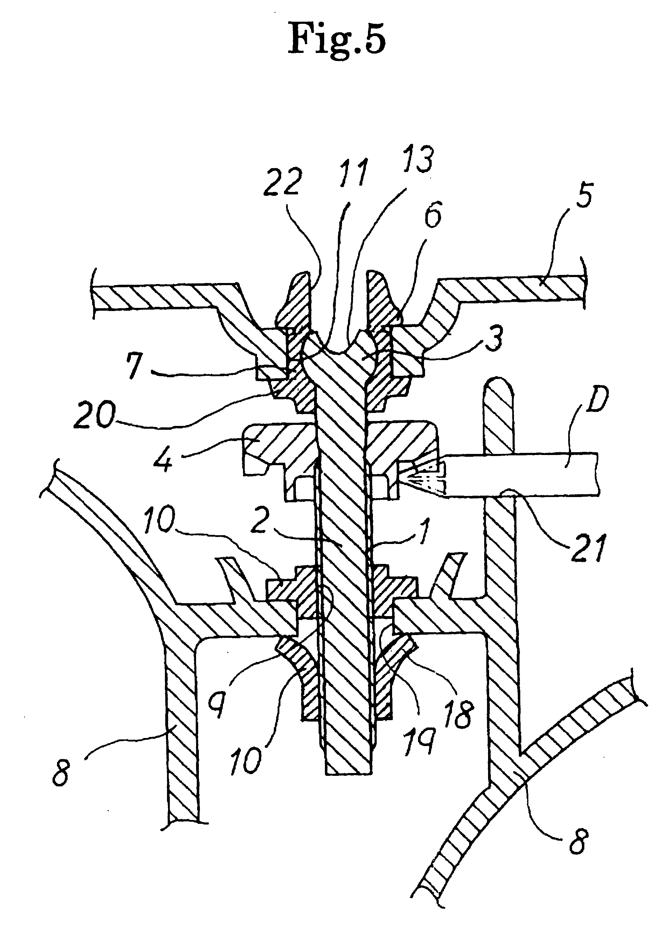

Fig. 5 is a cross sectional view showing a state, in which a part mounting bolt according to the invention is used to mount a lamp housing to a mounted member.
Fig. 6 is a cross sectional view showing a state, in which a conventional part mounting bolt is used to mount a lamp housing to a mounted member.
Fig. 7 is a partial, cross sectional view showing a threading member of a part mounting bolt.
Fig. 8 is a perspective view showing a conventional part mounting bolt.

### Description of the Preferred Embodiment

The invention will be described below in detail with reference to the drawings, in which an embodiment of the invention is shown.

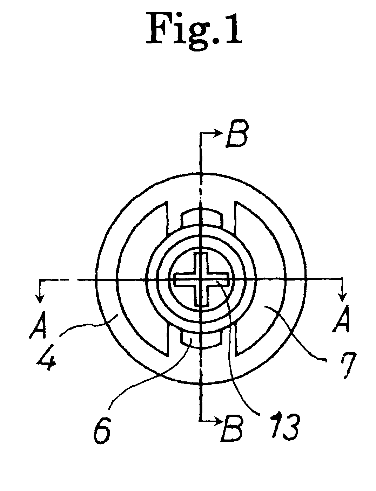

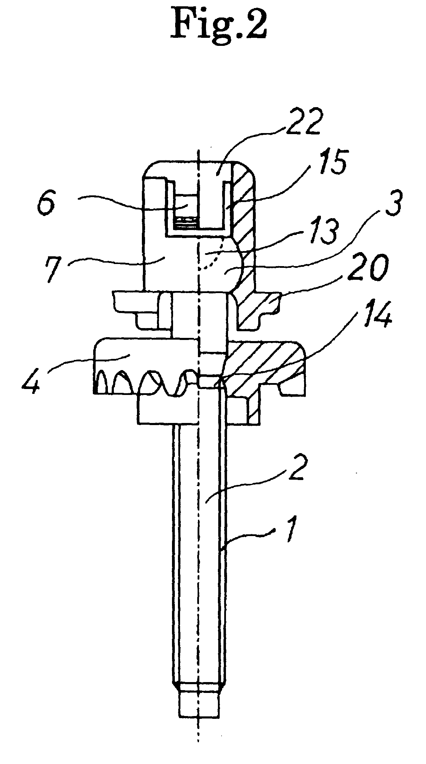

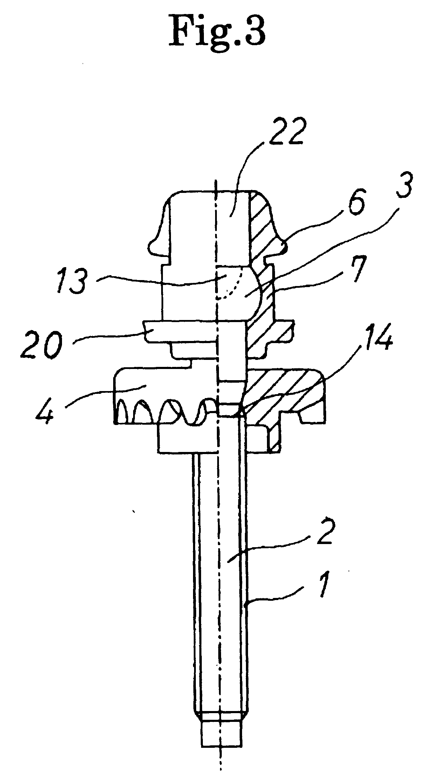

Figs. 1 to 3 are views showing an embodiment of a part mounting bolt according to the invention. A substantially spherical-shaped pivot section 3 is formed on one end of a bolt body 2 formed at an outer peripheral surface with an external thread portion 1. Formed on a top end surface of the pivot section 3 is a cross hole 13 (in the case where a + (plus) driver is used) for insertion of a tool, for example, a driver, for turning the part mounting bolt in the event of threading of the part mounting bolt. Such bolt body 2 can be manufactured by forming as by application of plastic working, such as cold forging or the like, on a steel wire of SWRCH (carbon steel wire rods for cold heading and cold forging) by means of a heading machine, and thread rolling, and further can be made rust preventative with surface treatment such as DACROTIZED (Trade name for U.S. Company Metal Coatings International Inc.) treatment. In addition, the cross hole 13 formed on the top end surface of the pivot section 3 can be suitably changed to any configuration, such as hexagon or the like, capable of transmission of torque.

A gear 4 made of a resin is integrally insert molded in a predetermined upper region on the external thread portion 1 of the bolt body 2 to make fine adjustment of a lamp after being mounted to the mounted member 5 (The bolt body serves as an insert, and a resin injection molded into a die makes the gear. In addition, in principle a resin used is the same as that of a latch member described later. This is because molding can be made inexpensively and efficiently.) Since the gear 4 is formed on an incomplete thread portion 14, only the gear 4 will not rotate separately from the bolt body 2 when the gear 4 is turned, and so the gear 4 and the bolt body 2 can be rotated together. Also, a latch member 7 of resin being inserted into a mounted member 5 is integrally insert molded and mounted on the pivot section 3 (The pivot section serves as an insert. In addition, a resin injected and filled into a die is preferably a nylon resin, for example, nylon 6, nylon 66, nylon 11, nylon 12, monomer casting nylon, nylon MXD6, a special heat-resisting polyamide fiber reinforced resin or the like; a polyamide imide or the like because these materials can provide predetermined physical properties. In this connection, a polyacetal resin can also be used if a contrivance, e.g., taking a shape of a latch pawl of the latch member into consideration, mixing glass fibers therein and so forth, is made. In addition, in principle glass fibers are mixed in the resin in use. A rate of such mixing is preferably less than 50 %, in particular preferably 15 to 50 %.). Hereupon, the latch member 7 has a side cylindrical portion extending upward from a side of the pivot section 3, and a driver insertion hole 22 is provided in the side cylindrical portion to extend to the cross hole 13. Latch pawls 6 adapted to engage with the mounted member 5 are formed on an outer peripheral surface of the side cylindrical portion near a top thereof, and notches 15 are formed in three locations below and right and left of the latch pawls (an example of a length in an axial direction of the latch pawl 6, that is, a length from a fixed end to a free end thereof, and a width of the latch pawl 6: in the case of the bolt body corresponding to M5, the length and width are about 4.5 mm and about 4 mm, respectively), and thereby given a necessary and adequate flexibility. Further, provided on a lower end of the latch member 7 is a flange 20 capable of abutting against one surface of the mounted member 5. In addition, since the pivot section 3 is formed to be substantially spherical-shaped, the latch member 7 formed and mounted on the pivot section 3 by insert molding can be inclined relative to an axis of the bolt body 2 (A surface of the latch member 7 abutting against the pivot section 3 is slidable on a surface of the pivot section 3) to allow the part mounting bolt to be mounted to the mounted member 5 in a space for the mounting work. Also, an optical axis of a headlight or the like can be adjusted by regulating an inclination of an axis of the latch member 7 relative to the axis of the bolt body 2.

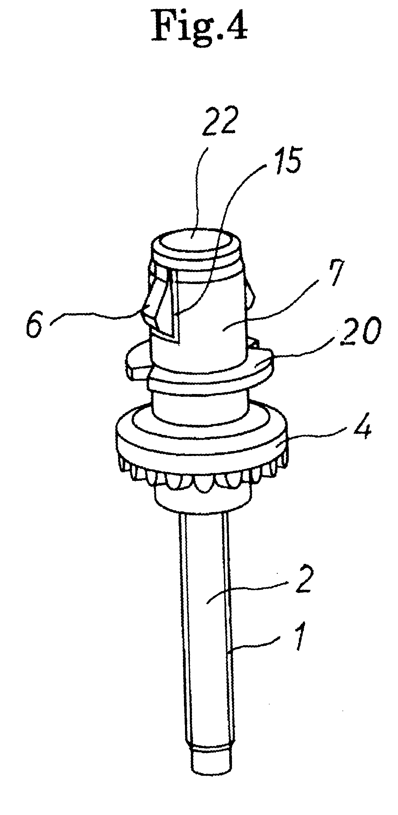

While the latch member 7 remains close to the surface of the pivot section 3 upon insert molding, such close contact is eliminated once an intense bending stress is applied to the latch member (for example, such stress is applied by inclining the latch member relative to the axis of the bolt body when the latch member is mounted on the mounted member 5. Besides, the latch member abuts against the surface of the pivot section in a state without substantially any clearance, so that there is produced no play between the latch member and the pivot section 3. In addition, when wax or the like is applied to the surface of the pivot section 3 to make lubricating treatment prior to the insert molding, it becomes easy to eliminate close contact between the surface of the pivot section 3 and the latch member and to mount parts on the mounted member 5 due to improvement in the sliding property of the latch member 7. Also, while the conventional latch member 7 has the slit 12 (see Fig. 8) for mounting on the pivot section 3, the latch member 7 of the invention does not posses such slit (see Fig. 4) and is not opened at its lower end, so that the latch member 7 can be surely mounted on the pivot section 3 to be free from falling off.

As described above, with the bolt manufactured by insert molding the latch member 7 on the bolt body 2 in a unitary manner, one end of the part mounting bolt is threaded into the lamp housing 8 by first placing the external thread portion 1 on a internal thread portion 9 of a threaded member 10 fitted in a predetermined position on the lamp housing 8, and inserting a + (plus) driver into the cross hole 13 of the pivot section 3 to rotate the part mounting bolt. In addition, the threaded member 10 comprises, like the conventional one (see Fig. 7), a flange portion 17 having the internal thread portion 9 on one end of a shank 16, and an upward-diverging latch pawl portion 18 on the other end of the shank. The threaded member 10 can be inserted into and mounted on the lamp housing 8 by inserting a tip end of the latch pawl portion 18 into a mount hole 19 of the lamp housing 8 while narrowing the latch pawl portion 18 in width, and allowing the latch pawl portion 18 to be enlarged in width due to its elasticity, when the latch pawl portion 18 has passed through the mount hole 19, to thereby interpose a portion of the lamp housing 8 between the flange portion 17 and the latch pawl portion 18.

Thereafter, the latch member 7 integrally insert molded on the pivot section 3 is inserted into and passed through the mount hole 11 of the mounted member 5 while narrowing the latch pawl portion 18 in width, whereby the latch pawls 6 and the flange portion 20 are fixed to interpose therebetween upper and lower surfaces of the mounted member 5, respectively. Even when the latch member 7 is inclined relative to the axis of the bolt body 2 and forcedly inserted through the mount hole 11 in a narrow space for the mounting work, the latch member 7 is prevented from falling off the pivot section 3, so that the lamp housing 8 can be surely mounted on the mounted member 5.

After the lamp housing 8 is mounted on the mounted member 5, the lamp can be adjusted in optical axis and mounted rigidly on the mounted member 5 without play by inserting a driver D into a driver insertion hole 21 formed on the lamp housing 8 to rotate the gear 4.

In addition, while in the above-mentioned embodiment an automobile lamp is mounted by inserting the threaded member 10 into the lamp housing 8, threading the bolt body 2 into the threaded member 10, and inserting the latch member 7 into the mounted member 5 such as a bumper or the like, it goes without saying that an automobile lamp can be mounted on the mounted member 5 such as a bumper or the like by inserting the threaded member 10 into the mounted member 5, threading a bolt into the threaded member 10, and inserting the latch member 7 into the lamp housing 8 in a reverse manner to that described above.

As described above, with the part mounting bolt according to the invention, a metallic pivot section is formed on one end of a bolt body to be unitary with a bolt, and a latch member of resin is insert molded on the pivot section, whereby the latch member can be fitted onto the pivot section without the provision of any slit on the latch member, and the latch member is free from falling off the pivot section when the latch member is inclined relative to the axis of the bolt body 2 and forcedly inserted through the mount hole of the mounted member in a narrow space for the mounting work. Further, with the part mounting bolt according to the invention, the latch member abuts against the surface of the pivot section in a state without substantially any clearance, so that a part such as a lamp or the like can be surely mounted on the mounted member without play (Incidentally, a force (taking-out load) resisting taking-out of the latch member from the mounted member is equivalent to or more than that in the prior art (in an example, 1.5 times or more)). Also, since there is no need of fitting the latch member onto the pivot section manually, man-hour for the work of mounting a part is decreased to lead to reduction in cost. In addition, a nylon resin or the like mixed with an appropriate amount of glass fiber is used as a material for formation of the latch member, and contrivance is made on a configuration of latch pawls on the latch member, so that a force (insertion load) required for inserting the latch member through the mounted member suffices to be exceedingly small (in an example, about one third) as compared with that in the prior art. Also, the gear and the latch member can be molded on the bolt body in inexpensive and efficient manner by insert molding them with a resin of the same material. Further, the part mounting bolt according to the invention can be applied to many uses such that it can mount an automobile lamp on the mounted member such as a bumper or the like and a part such as a bicycle lamp, an antenna, a compartment lighting, a mirror or the like can be mounted on the mounted member to be capable of adjustment in inclination.

Accordingly, the invention is very useful in solving the problem involved in the prior part mounting bolt.

## Claims

1. A part mounting bolt, in which a gear of resin is insert molded on an upper region of an external thread of a metallic bolt body to rotate a bolt about an axis, the part mounting bolt comprising a pivot section formed integrally on one end of the bolt body and made of the same material as that of the bolt body, and a latch member of resin integrally insert molded on the pivot section to fix a part on a mounted member.

2. The part mounting bolt according to claim 1, wherein a resin for formation of the latch member is selected from a group consisting of a polyacetal resin, a nylon resin and a polyamide imide.

3. The part mounting bolt according to claim 1, wherein a resin for formation of the latch member is a nylon resin.

4. The part mounting bolt according to claim 3, wherein the nylon resin is selected from a group consisting of nylon 6, nylon 66, nylon 11, nylon 12, monomer casting nylon, nylon MXD6, and a special heat-resisting polyamide fiber reinforced resin.

5. The part mounting bolt according to claim 2, wherein the polyacetal resin is a polyacetal resin mixed with glass fibers.

6. The part mounting bolt according to claim 3 or 4, wherein the nylon resin is a nylon resin mixed with glass fibers.
